# EUROPEAN PATENT APPLICATION

(11) **EP 4 808 124 A1**
(43) Date of publication of application: **16.09.2026**
(21) Application number: 25758495.3
(22) Date of filing: 08.01.2025
(51) Int. Cl.: H04N 19/553, H04N 19/597, H04N 19/172

(54) **IMAGE PROCESSING DEVICE AND IMAGE ENCODING AND DECODING METHOD**

(30) Priority: 23.02.2024 KR 20240026720
(71) Applicant: Samsung Electronics Co., Ltd., Suwon-si, Gyeonggi-do 16677 (KR)
(72) Inventor: JEONG, Seungsoo, Suwon-si, Gyeonggi-do 16677 (KR); CHOO, Sungkwon, Suwon-si, Gyeonggi-do 16677 (KR); KIM, Yurie, Suwon-si, Gyeonggi-do 16677 (KR); OH, Youngho, Suwon-si, Gyeonggi-do 16677 (KR); YOON, Geonsu, Suwon-si, Gyeonggi-do 16677 (KR); CHOI, Woongil, Suwon-si, Gyeonggi-do 16677 (KR)
(74) Representative: Gulde & Partner
(86) International application number: PCT/KR2025/000399
(87) International publication number: WO 2025/178247

(57) **Abstract**

Provided is a method for decoding light field images and outputting same. The method may comprise the steps of: obtaining a first encoded frame and second encoded frame representing reference frames captured from different viewpoints, and an encoded synthesis parameter and encoded occlusion map for generating a synthesized frame; decoding the first encoded frame, the second encoded frame, the encoded synthesis parameter, and the encoded occlusion map in order to recover a first frame, a second frame, a disparity vector, a synthesized weight, and an occlusion map; generating a synthesized frame on the basis of the first frame, the second frame, the disparity vector, the synthesized weight, and the occlusion map; and outputting light field images including the first frame, the second frame, and the synthesized frame.

## Description

### Technical Field

The present disclosure relates to a method of compressing, transmitting, and reconstructing large-capacity light field images.

### Background Art

A light field refers to a field for expressing the intensity and direction of light reflected from a subject in a three-dimensional space. Light field, which is a new approach to three-dimensional image processing, is based on a large amount of data. Therefore, a method for efficiently compressing, transmitting, and reconstructing large-capacity light field images, is required.

### Disclosure of Invention

### Solution to Problem

According to an aspect of the present disclosure, a method of decoding and outputting light field images may be provided. The method may include obtaining an encoded first frame and an encoded second frame, indicating reference frames captured from different views, and encoded synthesis parameter and an encoded occlusion map for generating a synthesis frame. The method may include decoding the encoded first frame, the encoded second frame, the encoded synthesis parameter, and the encoded occlusion map to reconstruct a first frame, a second frame, a disparity vector, a synthesis weight, and an occlusion map. The method may include generating a synthesis frame based on the first frame, the second frame, the disparity vector, the synthesis weight, and the occlusion map. The method may include outputting light field images including the first frame, the second frame, and the synthesis frame.

According to an aspect of the present disclosure, an image processing device may be provided. The image processing device may include a memory storing one or more instructions, and one or more processors configured to execute the one or more instructions stored in the memory. The one or more processors may execute the one or more instructions to obtain an encoded first frame and an encoded second frame, indicating reference frames captured from different views, and an encoded synthesis parameter and an encoded occlusion map for generating a synthesis frame. The one or more processors may execute the one or more instructions to decode the encoded first frame, the encoded second frame, the encoded synthesis parameter, and the encoded occlusion map to reconstruct a first frame, a second frame, a disparity vector, a synthesis weight, and an occlusion map. The one or more processors may execute the one or more instructions to generate a synthesis frame based on the first frame, the second frame, the disparity vector, the synthesis weight, and the occlusion map. The one or more processors may execute the one or more instructions to output light field images including the first frame, the second frame, and the synthesis frame.

According to an aspect of the present disclosure, a method of encoding light field images may be provided. The method may include selecting reference frames including a first frame and a second frame from among original light field images including a plurality of views. The method may include generating a disparity vector, a synthesis weight, and an occlusion map for inferring frames between the first frame and the second frame. The method may include encoding the first frame, the second frame, the disparity vector, the synthesis weight, and the occlusion map.

### Brief Description of Drawings

FIG. 1 is a diagram for describing a light field image generated by a decoder, according to an embodiment of the present disclosure.
FIG. 2 is a diagram for describing an operation, performed by an image processing device, of obtaining light field images, according to an embodiment of the present disclosure.
FIG. 3 is a diagram for describing an encoding and decoding process for light-field images, according to an embodiment of the present disclosure.
FIG. 4 is a diagram for describing a method of compressing and transmitting light field images, according to an embodiment of the present disclosure.
FIG. 5 is a diagram for describing an operation, performed by an image processing device, of generating a synthesis frame, according to an embodiment of the present disclosure.
FIG. 6 is a diagram for describing an operation, performed by an image processing device, of generating a synthesis frame, according to an embodiment of the present disclosure.
FIG. 7 is a diagram for describing an operation, performed by an image processing device, of generating a synthesis frame, according to an embodiment of the present disclosure.
FIG. 8 is a diagram for describing an operation, performed by an image processing device, of optimizing a view stride of a synthesis weight and a reference frame.
FIG. 9 is a diagram for describing an operation, performed by an image processing device, of optimizing a view stride of a synthesis weight and a reference frame.
FIG. 10 is a diagram for describing an encoding and decoding operation for an occlusion map, used in an encoding and decoding method of the present disclosure.
FIG. 11 is a diagram for describing a key occlusion map according to an embodiment of the present disclosure.
FIG. 12 is a diagram for describing an operation of generating occlusion maps based on a key occlusion map, according to an embodiment of the present disclosure.
FIG. 13 is a diagram for describing an occlusion map according to an embodiment of the present disclosure.
FIG. 14 is a block diagram illustrating a configuration of an image processing device according to an embodiment of the present disclosure.
FIG. 15 is a block diagram illustrating a configuration of an image processing device according to an embodiment of the present disclosure.

### Mode for the Invention

The terms used in the present specification will be briefly described, and the present disclosure will be described in detail. The terms used in the present disclosure have been selected to be as widely used as possible, considering their functions in the present disclosure; however, they may vary depending on the intent of a person skilled in the art, case law, the emergence of new technologies, etc. In addition, in specific cases, there are terms arbitrarily selected by the applicant, and in such cases, their meanings will be described in detail in the relevant description section. Therefore, terms used in the present disclosure should be defined not merely by their names, but based on their meanings and the content throughout the present disclosure.

A singular expression may include a plural expression unless the context clearly indicates otherwise. Terms used herein, including technical or scientific terms, may have the same meaning as generally understood by a person skilled in the art as described in the present specification. In addition, terms including ordinal numbers, such as "first" or "second" as used in the present specification, may be used to describe various components, but said components should not be limited by said terms. The above terms are used solely for the purpose of distinguishing one component from another component.

In the entire specification, when a part is described as "including" a certain component, this means that, unless specifically stated otherwise, it does not exclude other components but may include additional components. In addition, terms such as "part" and "module" as described in the specification refer to a unit that processes at least one function or operation, and this may be implemented in hardware or software, or as a combination of hardware and software.

Below, with reference to the accompanying drawings, embodiments of the present disclosure are described in detail so that a person skilled in the art may easily implement the same. However, the present disclosure may be implemented in various different forms and is not limited to the embodiments described herein. In addition, to clearly explain the present disclosure in the drawings, parts unrelated to the description have been omitted, and similar parts throughout the specification have been given similar reference numerals.

Below, the present disclosure is described with reference to the accompanying drawings.

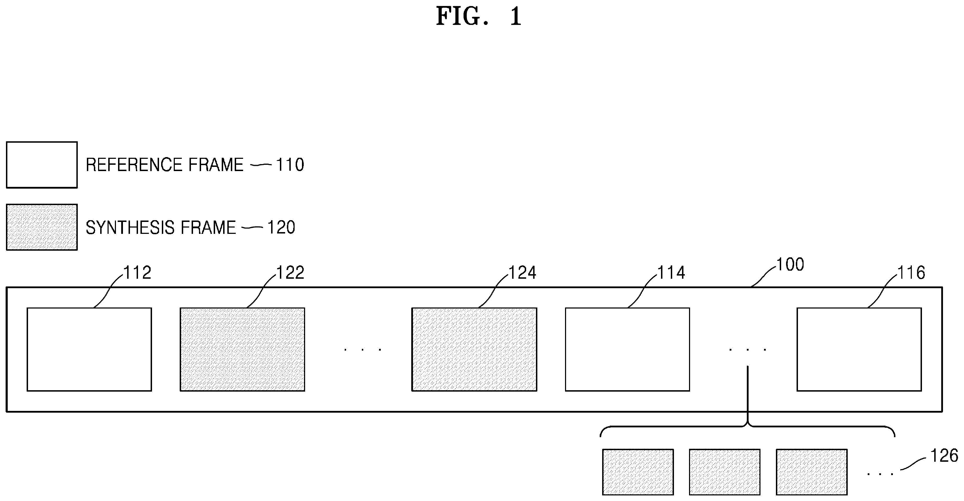

FIG. 1 is a diagram for describing a light field image generated by a decoder, according to an embodiment of the present disclosure.

Referring to FIG. 1, reconstructed light field images 100 generated by the decoder are shown. The reconstructed light field images 100 may include one or more reference frames 110 and one or more synthesis frames 120.

In an embodiment, the reconstructed light field images 100 may be generated by receiving, from an encoder, data encoded based on original light field images and reconstructing the same. The original light field images may be images corresponding to a plurality of views. For example, original light field images including N images are obtained by obtaining the respective images at different views, and may include a total of N viewpoints. The original light field images may be obtained by obtaining, by a plurality of cameras, images of different views. Alternatively, the original light field images may be obtained by obtaining, by a single camera, images of different views while the single camera moves.

In an embodiment, the original light field images are encoded by an encoder. In this case, instead of encoding all of the original light field images, only some images are selected, encoded, and transmitted to a decoder. In addition, the remaining images other than the selected images are encoded in the form of supplementary information rather than being encoded as images themselves, and are transmitted to the decoder.

The reference frame 110 may refer to images selected from among the original light field images. The reference frame 110 may be encoded by the encoder and transmitted to the decoder. The decoder may reconstruct the reference frame 110 by decoding the encoded reference frame 110. As a result, a first reference frame 112, a second reference frame 114, and a third reference frame 116 are shown in FIG. 1 as examples of the reference frame 110 reconstructed by the decoder.

Meanwhile, the reference frame 110 may be replaced and referred to by various expressions representing the same/similar concept. The reference frame 110 may be replaced, for example, by expressions such as reference image, reference view, key frame, anchor frame, and anchor view, but is not limited to these examples.

The synthesis frame 120 may refer to images corresponding to the remaining frames other than the reference frames 110 encoded and transmitted from among the original light field images, and may refer to images generated through a synthesis process in a decoder. The decoder may generate, by referring to the reference frames 110, the synthesis frames 120 having a view between the reference frames 110. For example, the decoder may generate a first synthesis frame 122, ..., a second synthesis frame 124, which are synthesis frames 120 having views between the first reference frame 112 and the second reference frame 114, based on the first reference frame 112 and the second reference frame 114. In addition, for example, the decoder may generate third synthesis frames 126, which are synthesis frames 120 having views between the second reference frame 114 and the third reference frame 116, based on the second reference frame 114 and the third reference frame 116.

Meanwhile, the synthesis frame 120 may be replaced with and referred to by various expressions representing the same/similar concept. The synthesis frame 120 may be replaced, for example, by expressions such as synthesis frame, composite view, predicted frame, predicted image, predicted view, inferred frame, inferred image, and inferred view, but is not limited to the examples described above.

In an embodiment, when the decoder generates the synthesis frames 120, additional information (pixel movement information, synthesis weight information, etc.) transmitted from the encoder may be used.

An encoding/decoding method according to an embodiment relates to a method of efficiently compressing, transmitting, and reconstructing large-capacity original light field images. The large-capacity original light field images have different views, but there are overlapping portions between the images. Accordingly, compressing and transmitting all images is not a relatively efficient method.

The encoder may compress and transmit only the reference frames 110, which are selected parts of the images, by using the encoding method of the present disclosure, and compress and transmit additional information corresponding to each of the remaining images. Because the encoded additional information is relatively low-capacity data compared to the encoded frame, the amount of data transmitted from the encoder to the decoder may be reduced. In addition, the encoder may generate additional information optimized for each scene through an optimization process. The encoder compresses and transmits the additional information, thereby generating high-quality synthesis frames 120 in the decoder.

The decoder may reconstruct data received from the encoding data, by using the decoding method of the present disclosure. In addition, the decoder may generate the synthesis frame 120 by using a pixel warping-based multi-scale frame interpolation method of the present disclosure. In this case, the synthesis frame 120 may be generated based on a reconstructed reference frame 110 and reconstructed additional information.

Meanwhile, in the present disclosure, the encoder and the decoder may also be referred to as an "image processing device". For example, additional image processing devices may respectively perform encoding and decoding, or a single image processing device may perform both encoding and decoding.

The encoding and decoding method and operations of the encoder and decoder, of the present disclosure, are described in more detail through the drawings described below and descriptions thereof.

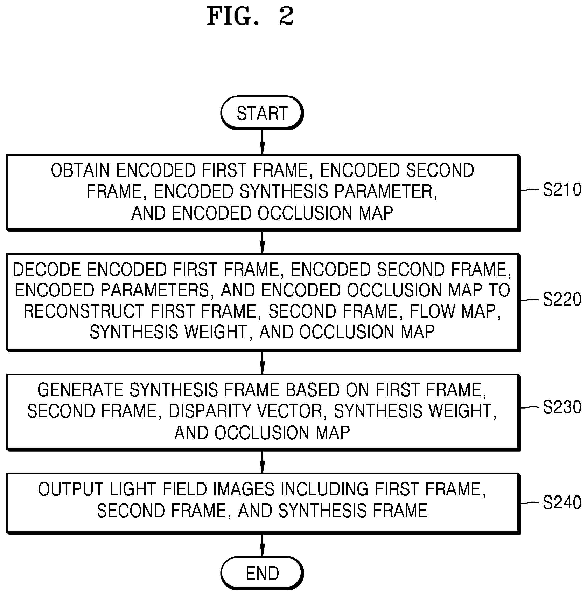

FIG. 2 is a diagram for describing an operation, performed by an image processing device, of obtaining light field images, according to an embodiment of the present disclosure.

In FIG. 2, when operations of a method of decoding light field images of the present disclosure are described, a decoder that performs the decoding operation will be referred to as an "image processing device".

In an embodiment, the image processing device may decode and output light field images. Below, operations for decoding light field images are described. The light field images may include images having a plurality of different views.

In operation S210, the image processing device may obtain an encoded first frame, an encoded second frame, an encoded synthesis parameter, and an encoded occlusion map.

In an embodiment, the image processing device may obtain encoded reference frames. The encoded reference frames may be received from an encoder or encoded by an image processing device.

The image processing device may adaptively select reference frames, and the number of selected reference frames may be 2 or more. Below, an example is described in which there are two reference frames. A plurality of different views may be included between the reference frames.

An encoded first frame and an encoded second frame may represent reference frames photographed from different views. For example, the first frame may be an image of a first view obtained by photographing an object by a camera located at a first location, and the second frame may be an image of a second view obtained by photographing the object by a camera located at a second location. A plurality of different views may be further included between the first view and the second view. The image processing device may generate synthesis frames corresponding to different views between the first view and the second view.

An encoded synthesis parameter represents a parameter for generating a synthesis frame having a view between the first frame and the second frame. The encoded synthesis parameter may include pixel movement information and synthesis weight information.

In an embodiment, the encoded first frame, the encoded second frame, and the encoded synthesis parameter may be obtained by using various types of video coding techniques. For example, High Efficiency Video Coding (HEVC) may be used as an encoding method. However, the disclosure is not limited thereto, and other types such as H.264, Versatile Video Coding (VVC), or AOMedia Video (AV1) may be used.

An encoded occlusion map represents an area occluded by an object appearing between the first view corresponding the first frame and the second view corresponding to the second frame. The encoded occlusion map may include confidence weight information for processing occlusion regions. The encoded occlusion map may include information related to the occlusion regions (for example, information about the number of occlusion regions and information about the maximum length of the occlusion regions).

In an embodiment, the occlusion map may be encoded and decoded by using an occlusion map encoder/decoder.

In operation S220, the image processing device may decode the encoded first frame, the encoded second frame, the encoded synthesis parameter, and the encoded occlusion map so as to reconstruct the first frame, the second frame, a disparity vector, a synthesis weight, and an occlusion map.

In an embodiment, the encoded first frame and the encoded second frame may be decoded so as to be reconstructed to the first frame and the second frame. The encoded synthesis parameter may be decoded and reconstructed to the disparity vector and the synthesis weight. The disparity vector represents pixel movement information from a reference frame, and the synthesis weight represents a weight used for image combination. The encoded occlusion map may be decoded and reconstructed to an occlusion map. The decoding method may be performed by applying a decoding method corresponding to an encoding method.

In operation S230, the image processing device may generate a synthesis frame based on the first frame, the second frame, the disparity vector, the synthesis weight, and the occlusion map.

In an embodiment, the image processing device may generate warped images based on the reconstructed reference frame and disparity vector. For example, when a synthesis frame corresponding to an n view between the first view and the second view, the image processing device may generate a first warped image obtained by shifting pixels from the first view, which is a reference point, to the n view by using the first frame and the disparity vector, and generate a second warped image obtained by shifting pixels from the second view, which is a reference point, to the n view by using the second frame and the disparity vector.

The image processing device may generate a synthesis frame by combining the warped images.

In an embodiment, the image processing device may generate multi-scale warped images. For example, the image processing device may generate warped images of a first scale and warped images of a second scale. The image processing device may generate intermediate images by independently combining warped images of respective scales. The independent combination indicates that, when an intermediate image of a certain scale is generated, a warped image of another scale is not involved. For example, the image processing device may generate a first intermediate image by combining warped images of the first scale, and generate a second intermediate image by combining warped images of a second scale. The image processing device may generate a synthesis frame by combining the intermediate images. For example, a synthesis frame may be generated by combining the first intermediate image with the second intermediate image.

In operation S240, the image processing device may output light field images including the first frame, the second frame, and one or more synthesis frames.

In an embodiment, the image processing device may transmit the light field images to an external device (for example, a user device or the like). The image processing device may transmit the light field images so that the light field images may be displayed in the external device.

In an embodiment, when the image processing device includes a display, the image processing device may display reconstructed light field images on a screen of the image processing device.

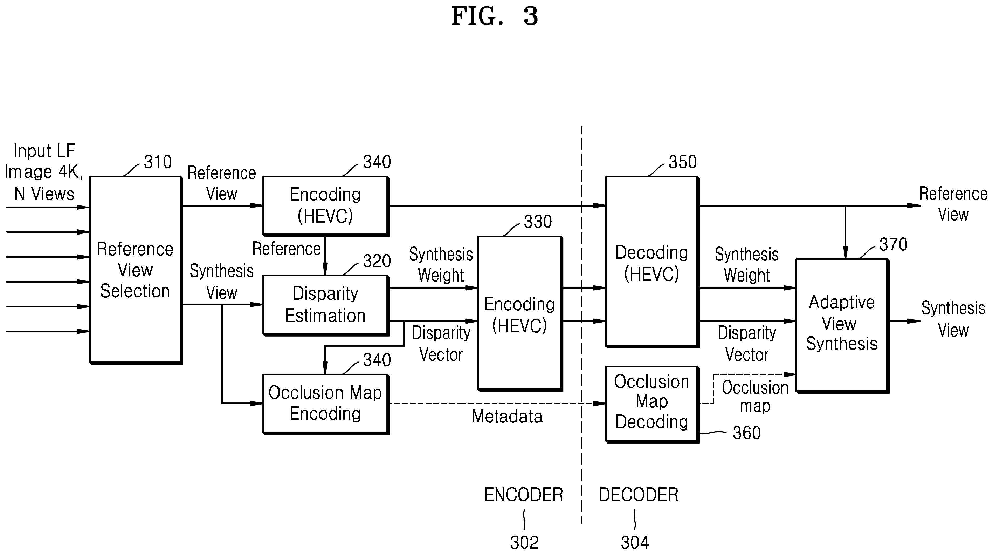

FIG. 3 is a diagram for describing an encoding and decoding process for light-field images according to an embodiment of the present disclosure.

Referring to FIG. 3, an encoder 302 may compress and transmit large-capacity light field images, and a decoder 304 may reconstruct encoded data received from the encoder 302 back to light field images. The decoded light field images may be displayed to a user.

In an embodiment, the encoder 302 may obtain large-capacity light field images, and compress and transmit the light field images. The light field images may be, for example, images of N views (for example, 60 views) of 4K resolution, but are not limited thereto. When transmitting light field images, the encoder 302 may compress and transmit only reference frames, rather than compressing and transmitting all images. In addition, additional information for generating the remaining frames other than the reference frames may be generated, and only the additional information may be transmitted to the decoder 304. Accordingly, synthesis frames corresponding to the remaining frames may be generated in the decoder 304.

The encoder 302 may include various modules for performing functions of reference view selection 310, disparity estimation 320, encoding 330, and occlusion map encoding 340. Operations of each module are described below. Each module may be implemented as a program, instruction, or code for implementing certain functions, and may be executed by a processor of the encoder 302.

In the reference view selection 310 operation, reference frames are selected from among light field images. For example, when the light field images are images corresponding to N views, reference views corresponding to M views among the N views (N>M) may be selected.

In an embodiment, the reference frames may be selected based on a preset view stride. For example, frames for every time stride V may be selected as reference frames. In an embodiment, the preset view stride may be adaptively adjusted. The encoder 302 may evaluate synthesis quality of a synthesis frame and may increase or decrease the view stride V for selecting reference frames based on the synthesis quality.

In the disparity estimation 320 operation, a disparity vector and a synthesis weight are calculated. The disparity vector may be used to generate warped images by shifting pixel information based on a reference frame, and the synthesis weight may be used to generate an intermediate image by combining warped images, or to generate a synthesis frame by combining intermediate images.

In an embodiment, the disparity vector and the synthesis weight may be optimized for each scene. The encoder 302 may perform scene-specific optimization to find the optimal disparity vector and synthesis weight for each input (light field image) instead of applying an already trained model as is. The encoder 302 may calculate the optimal disparity vector and weights for input data through scene-specific optimization.

In the encoding 340 operation, a reference frame, a disparity vector, and a synthesis weight may be encoded. For example, High Efficiency Video Coding (HEVC) may be used as an encoding method. However, the disclosure is not limited thereto, and other types such as H.264, Versatile Video Coding (VVC), or AOMedia Video (AV1) may be used.

In the occlusion map encoding 330 operation, an occlusion map may be encoded. The occlusion map may include confidence weights that enable processing of occlusion regions without pixel information, when generating a synthesis frame. The occlusion map may be generated based on original data (input light field images). For example, pixels of a frame at respective views are moved to pixel positions of other views and removed to back to their original positions, thereby generating information about the occlusion regions. Based on the occlusion map, confidence weights used to generate a synthesis frame may be generated. The confidence weight may indicate that pixels used in the synthesis may be trusted when using a synthesis frame. In other words, a pixel corresponding to a location of the confidence weight may be used when creating a synthesis frame.

The encoder 302 may transmit, to the decoder 304, an encoded reference frame, an encoded disparity vector, an encoded synthesis weight, and an encoded occlusion map. The encoded disparity vector and the encoded synthesis weight may be referred to encoded synthesis parameters.

In an embodiment, the decoder 304 may generate a reference frame and synthesis frames and reconstruct light field images. The decoder 304 may include various modules for performing functions of decoding (350), occlusion map decoding (360), and adaptive view synthesis (370). Operations of each module are described below. Each module may be implemented as a program, instruction, or code for implementing certain functions, and may be executed by a processor of the decoder 304.

In the decoding (350) operation, data received from the encoder 302 may be decoded to reconstruct a reference frame, a disparity vector, and a synthesis weight. The decoding method in the decoding (350) operation may be performed by applying a decoding method corresponding to an encoding method. For example, when the encoding method is HEVC, the decoding method may also be HEVC.

In the occlusion map decoding (360) operation, an encoded occlusion map received from the encoder 302 is reconstructed.

In the adaptive view synthesis (370) operation, frames corresponding to views between the reference frames are synthesized. One or more synthesis frames may be generated.

The decoder 304 may generate multi-scale warped images based on reference frames and disparity vectors. The decoder 304 may combine the multi-scale warped images and generate a plurality of intermediate images of multiple scales. In this case, a synthesis weight may be used in a process of generating the intermediate images. The decoder 304 may combine a plurality of intermediate images and generate a synthesis frame. In this case, a synthesis weight may be used in a process of generating the synthesis frame.

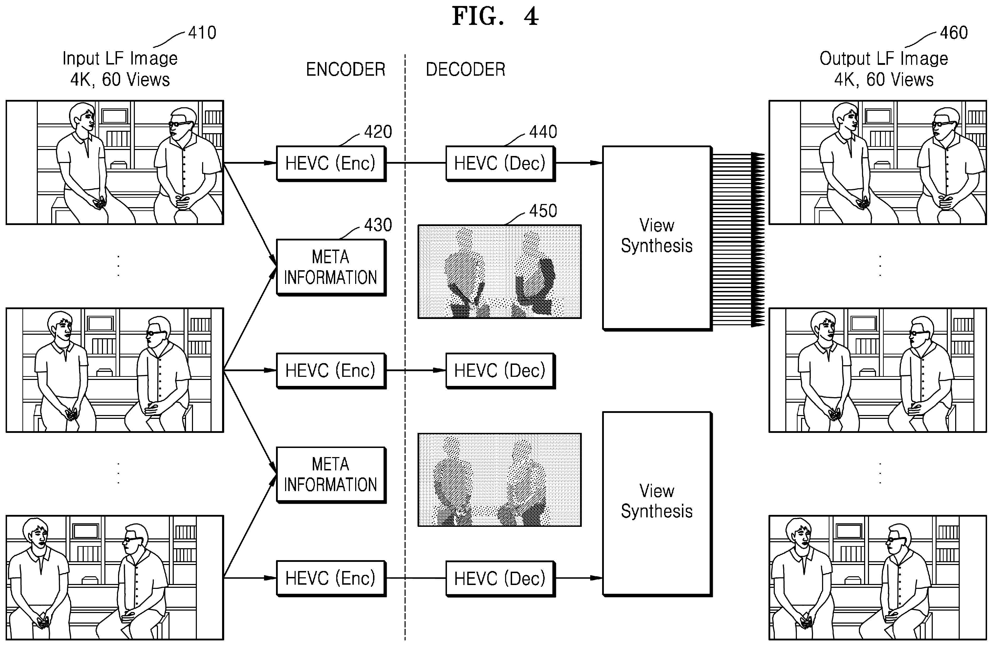

FIG. 4 is a diagram for describing a method of compressing and transmitting light field images, according to an embodiment of the present disclosure.

Referring to FIG. 4, the encoder may obtain input light field images 410. For example, the input light field images 410 may be images corresponding to 60 views of 4K resolution.

In an embodiment, the encoder may select reference frames from among the input light field images 410. The encoder may encode the reference frames and generate an encoded reference frame 420.

In an embodiment, the encoder may generate meta information 430 corresponding to the remaining frames other than the reference frames. The meta information may include information for expressing views between the reference frames. The meta information 430 may include, for example, a disparity vector representing pixel movement information. A warped image representing an image obtained by shifting by n views from the reference frame may be obtained by shifting pixels of the reference frame based on the disparity vector. The meta information 430 may include, for example, a synthesis weight. The synthesis weight may include a first synthesis weight used to obtain an intermediate image by synthesizing the warped image, and a second synthesis weight used to obtain a synthesis frame by synthesizing the intermediate image. The meta information 430 may include, for example, an occlusion map. The occlusion map may include a confidence weight representing the confidence of pixels used when generating a synthesis frame. The encoder may encode the meta information 430.

Because the encoder transmits the encoded reference frames 420 and the encoded meta information 430 to the decoder, a smaller amount of data than when encoding and transmitting all of the input light field images 410 may be transmitted to the decoder. That is, the amount of data transmitted may be reduced.

In an embodiment, the decoder may decode the encoded reference frame 420 and obtain a reconstructed reference frame 440. In addition, the decoder may decode the encoded meta information 430 and obtain reconstructed meta information 450. The reconstructed meta information 450 may include, for example, a disparity vector, a synthesis weight, and an occlusion map, but is not limited thereto.

The decoder may generate synthesis frames through a view synthesis process.

The decoder may generate, based on the reconstructed reference frame 440, a warped image representing an image obtained by shifting by n views from the reference frame. There may be a plurality of warped images. In addition, the warped images may be multi-scale images having different scales (for example, a first scale, a second scale, ..., a k^{th} scale).

The decoder may synthesize the plurality of warped images and generate intermediate images. For example, a first intermediate image may be generated from warped images of the first scale, and a second intermediate image may be generated from warped images of the second scale. Synthesis weights may be applied to warped images to generate intermediate images. In addition, a confidence weight included in an occlusion map may be applied so as to generate intermediate images.

The decoder may synthesize a plurality of intermediate images and generate a synthesis frame. The intermediate images may be multi-scale images. The decoder may adjust scale of intermediate images to become a scale of a final synthesis frame, and synthesize the intermediate images and generate a synthesis frame. For example, the first intermediate image of the first scale and the second intermediate image of the second scale are adjusted and synthesized so as to be unified into a certain scale, thereby generating a synthesis frame. Synthesis weights may be applied to the intermediate images to generate a synthesis frame.

In an embodiment, the decoder may output light field images 460. The output light field images 460 may include synthesis frames, which are images corresponding to the reconstructed reference frame 440 and views between the reference frames 440. In other words, even when the encoder does not encode and transmit all images of the input light field images 410, the decoder may generate synthesis frames, and thus all images of the output light field images 460 may correspond to all images of the original input light field images 410. In addition, because not all of the input light field images 410 are encoded and received, an amount of operations required for decoding may be reduced compared to when all of the input light field images 410 are decoded.

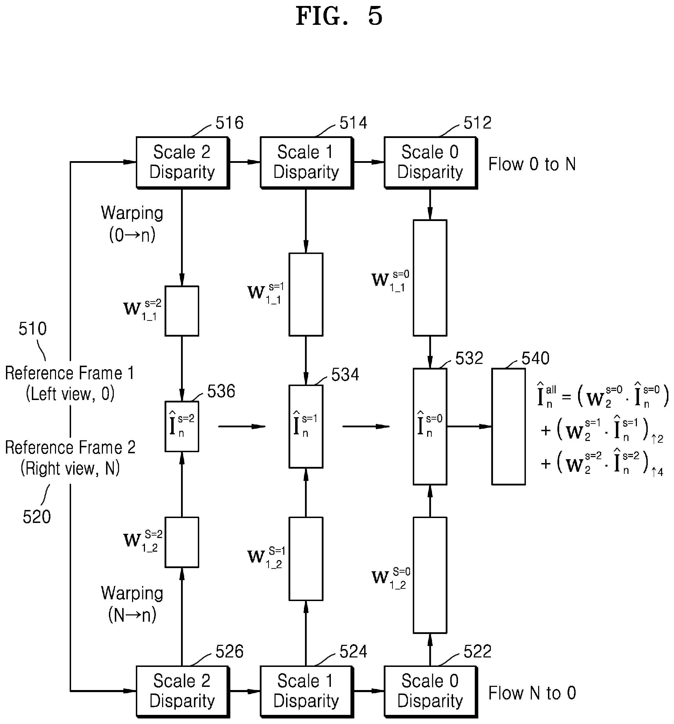

FIG. 5 is a diagram for describing an operation, performed by an image processing device, of generating a synthesis frame, according to an embodiment of the present disclosure.

In descriptions of FIG. 5, the image processing device may be a decoder. In addition, an example is described in which, when a first reference frame 510 is a left view, 0^{th} image, and a second reference frame 520 is a right view, N^{th} image, an n^{th} image between the first reference frame 510 and the second reference frame 520 is synthesized.

In an embodiment, the image processing device may generate a synthesis frame by using a pixel-based multi-scale synthesis method for combining a pixel value into a multi-scale independent flow. The pixel-based multi-scale synthesis method refers to a method of creating and synthesizing images of various scales by warping pixels. The image processing device may generate a synthesis frame by using multi-scale disparity vectors and multi-scale synthesis weights corresponding to the respective multi-scales. The synthesis frame may be an image having an intermediate view between reference frames.

The image processing device may generate warped images by using reconstructed reference frames and disparity vectors. The warped images may be multi-scaled warped images. In this case, the multi-scale warped images may be generated by using multi-scale disparity vectors. For example, the number of multi-scales may be 3 (Ns=3).

The image processing device may generate warped images based on the first reference frame 510 and multi-scale first disparity vectors 512, 514, and 516. For example, the image processing device may generate first warped images obtained by warping a view of the first reference frame 510 from 0 to n by using the first disparity vectors 512, 514, and 516 for shifting the view from 0 to n. The first disparity vectors 512, 514, and 516 for generating multi-scale warped images based on the first reference frame 510 may have different scales from each other. For example, the first disparity vector A 512 may be scale 9 (for example, 1x), the first disparity vector B 514 may be scale 1 (for example, 0.5x), and the first disparity vector C 516 may be scale 2 (for example, 0.25x).

In the same way, the image processing device may generate warped images based on the second reference frame 520 and multi-scale second disparity vectors 522, 524, and 526. For example, the image processing device may generate second warped images obtained by warping a view of the second reference frame 520 from N to n by using the second disparity vectors 522, 524, and 526 for shifting the view from N to n. The second disparity vectors 522, 524, and 526 for generating multi-scale warped images may have different scales from each other. For example, the second disparity vector A 522 may be scale 0 (for example, 1x), the second disparity vector B 524 may be scale 1 (for example, 0.5x), and the second disparity vector C 526 may be scale 2 (for example, 0.25x).

The image processing device may generate multi-scale intermediate images based on the multi-scale disparity vectors. For example, the image processing device may combine a first warped image A with a second warped image A and generate a first intermediate image 532. The first intermediate image 532 may be an image of scale 0 (for example, 1x). In addition, the image processing device may generate a second intermediate image 534 having a size of scale 1 (for example, 0.5x) by combining a first doped image B with a second warped image B, and generate a third intermediate image 536 having a size of scale 2 (for example, 0.25x) by combining a first warped image C with a second warped image C.

The image processing device may generate a synthesis frame 540 based on the multi-scale intermediate images. For example, the image processing device may generate the synthesis frame 540 by combining the first intermediate image 532, the second intermediate image 534, and the third intermediate image 536 with each other. In the example in FIG. 5, the generated synthesis frame 540 may be an image having an n^{th} view between 0 and N. The image processing device may reconstruct the scales of the intermediate images to generate the synthesis frame 540. For example, because the second intermediate image 534 is an image of a 0.5x scale, the scale may be adjusted to 2x to match the scale of the first intermediate image 532, which is the original scale. In addition, because the third intermediate image 536 is an image of a 0.25x scale, the scale may be adjusted to 4x to match the scale of the first intermediate image 532, which is the original scale.

In an embodiment, the image processing device may use a synthesis weight when generating the synthesis frame 540.

The image processing device may apply a first synthesis weight when generating an intermediate image. For example, when the number of multi-scales is 3 (Ns=3) , the first synthesis weight may be applied to disparity vectors respectively corresponding to scales (s=0, 1, 2). This may be expressed as a mathematical formula shown below. ${\left\{{\hat{I}}_{n}^{s}={w}_{1 _ 1}^{s}⋅{F}_{1}^{s}+{w}_{1 _ 2}^{s}⋅{F}_{2}^{s}\right\}}_{s = 0 , 1,2}$

In the formula above, ${\hat{I}}_{2}^{2}$ indicates an intermediate image, ${F}_{1}^{2}$ indicates a first warped image, ${w}_{1 _ 1}^{s}$ indicates a first weight applied to the first warped image, ${F}_{2}^{2}$ indicates a second warped image, and ${w}_{1 _ 2}^{s}$ indicates a second weight applied to the second warped image. The first weight may differ for each scale.

The image processing device may apply a second synthesis weight when generating the synthesis frame 540. For example, when the number of multi-scales is 3 (Ns=3) , the second synthesis weight may be applied to intermediate images respectively corresponding to scales (s=0, 1, 2). This may be expressed as a mathematical formula shown below. ${\hat{I}}_{n}^{all} = \left({w}_{2}^{s = 0}⋅{\hat{I}}_{n}^{s = 0}\right) + {\left({w}_{2}^{s = 1}⋅{\hat{I}}_{n}^{s = 1}\right)}_{↑ 2} + {\left({w}_{2}^{s = 2}⋅{\hat{I}}_{n}^{s = 2}\right)}_{↑ 4}$

In the formula above, ${\hat{I}}_{n}^{all}$ indicates the synthesis frame 540, ${\hat{I}}_{n}^{s}$ indicates an intermediate image, ${w}_{2}^{s}$ indicates a second weight applied to the intermediate image, and ↑2,↑4 indicates reconstructing (2x, 4x) the adjusted scales. The second weight may differ for each scale.

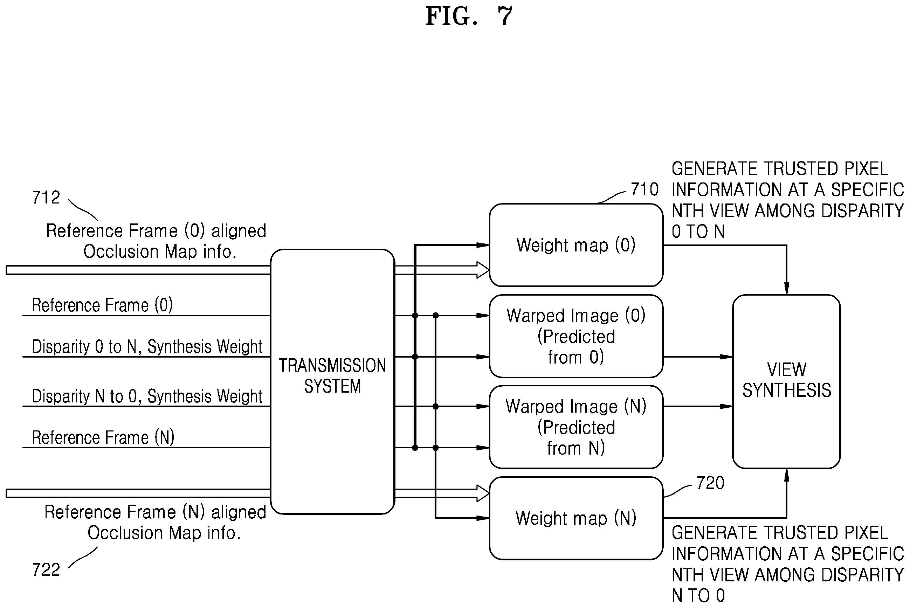

In an embodiment, the image processing device may use a confidence weight included in an occlusion map to generate an intermediate image. Application of the confidence weight is described in descriptions of FIG. 7.

Meanwhile, in descriptions of FIG. 5, an example is described in which when the first reference frame 510 is an image corresponding to view 0 and the second reference frame 520 is an image corresponding to an N^{th} view, the synthesis frame 540 corresponding to an intermediate n^{th} view between 0 and N is generated. However, the disclosure is not limited thereto. For example, synthesis frames respectively corresponding to views 1, 2, ..., n, ..., N-1 may be generated through pixel-based multi-scale synthesis in the same way.

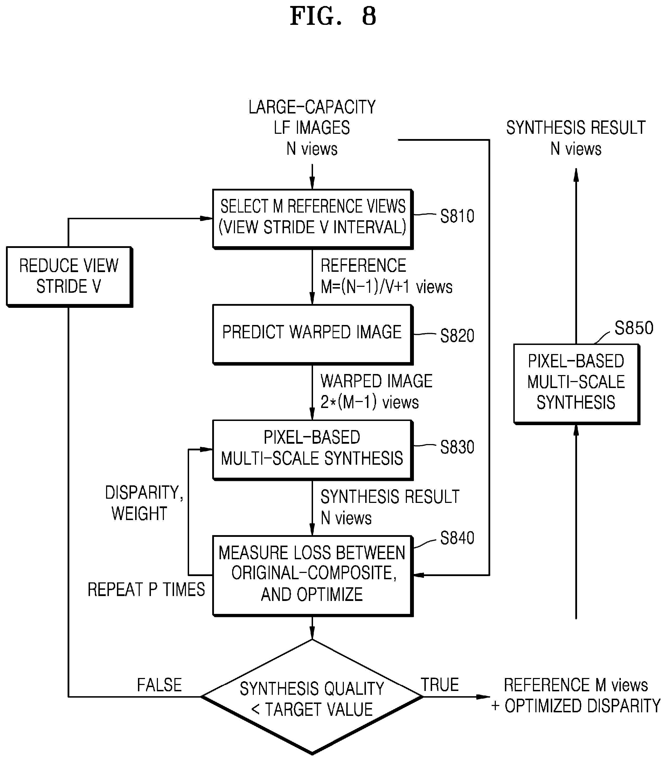

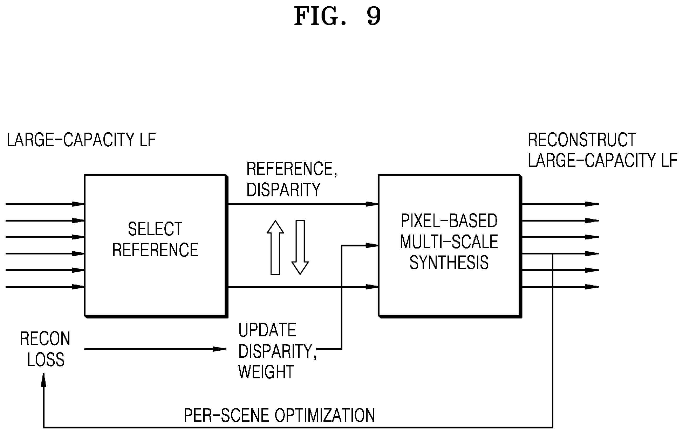

Meanwhile, because the above-described number of multi-scales and the magnification of multi-scales are examples for the convenience of explanation, the number of multi-scales and the magnification of multi-scales are not limited to the examples described above. A scale weight, which represents a scaling magnification, may be determined by optimization operations during an encoding process. The optimization operation is described in descriptions of FIGS. 8 and 9.

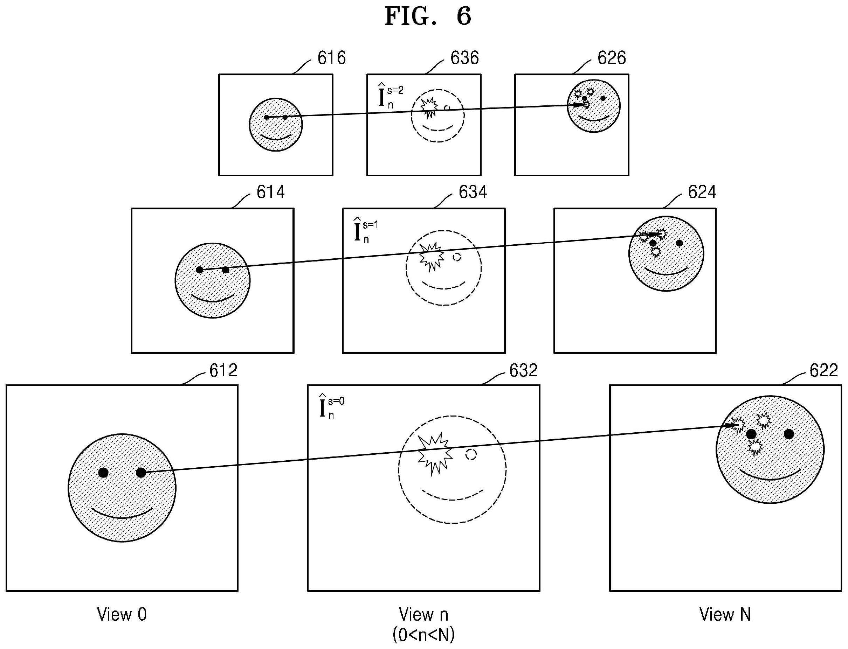

FIG. 6 is a diagram for describing an operation, performed by an image processing device, of generating a synthesis frame, according to an embodiment of the present disclosure.

In descriptions of FIG. 6, the image processing device may be a decoder. In addition, an example is described in which, when a first reference frame is a left view, 0^{th} image, and a second reference frame is a right view, N^{th} image, an n^{th} image between the first reference frame and the second reference frame is synthesized.

In an embodiment, the image processing device may generate a plurality of intermediate images to generate a synthesis frame. The image processing device may generate a plurality of intermediate images of different scales, and apply a synthesis weight to the same, thereby generating a synthesis frame.

For example, the image processing device may generate a first warped image A corresponding to the n^{th} view based on a 1x scale image 612 and a disparity vector of the first reference frame, generate a second warped image A corresponding to the n^{th} view based on a 1x scale image 622 and a display vector of the second reference frame, and then combine the first warped image A with the second warped image A to generate a first intermediate image 632. The first intermediate image 632 may be an image corresponding to the nth view and having a 1x scale. In the same way, the image processing device may generate a second intermediate image 634 corresponding to the n^{th} view and having a 0.5x scale, based on 0.5x scale images 614 and 624 of reference images, and generate a third intermediate image 636 corresponding to the n^{th} view and having a 0.25x scale based on 0.25x scale images 616 and 626 of the reference images.

Meanwhile, although the example described above describes that a scale of a reference frame is adjusted first and a warped image is generated, the warped image may be generated first based on the reference frame and the scale of the warped image may be adjusted.

The image processing device may generate a synthesis frame by synthesizing the intermediate images. For example, the image processing device may generate a synthesis frame through a weighted sum of the first intermediate image 632, the second intermediate image 634, and the third intermediate image 636.

The image processing device according to an embodiment may combine pixel values into independent flows of a plurality of scales. That is, the image processing device may synthesize a new image by referring to images of various scales, and as a result, non-linear changes between views of the image are reflected, thereby enhancing the expressiveness of the image.

Referring to FIG. 6, there is no reflected light in images at view 0, and there is reflected light in images at the N^{th} view. As an example, three light reflection areas are shown in each of the images at the n^{th} view in FIG. 6. The image processing device may utilize images of various scales for image synthesis to reflect non-linear changes in reflected light present in an image at the n^{th} view.

To describe more specifically, when the first intermediate image 632, the second intermediate image 634, and the third intermediate image 632 are each generated, the images are processed at different scales, and thus areas referenced for image synthesis may be different. Referring to FIG. 6, the areas referenced when each of the intermediate images are generated are slightly different due to different scales, as indicated by arrows. Accordingly, in the example in FIG. 6, each of the three different light reflection areas is referenced. However, each of the arrows is merely illustrated as an example for convenience of explanation, and does not limit the reference to actual areas indicated by the arrows. When the image processing device utilizes multi-scale images for image synthesis, a synthesis frame with higher expressiveness may be obtained than when synthesizing single-scale images.

In an embodiment, the image processing device may utilize a scale weight representing multi-scale magnification. A scale weight may be determined by optimization operations during an encoding process. The optimization operations are further described with reference to FIGS. 8 and 9.

Meanwhile, the image processing device may use an optimized first synthesis weight to perform weighted combination when combining warped images to generate an intermediate image, and use an optimized second synthesis weight to perform weighted combination when combining intermediate images and generating a synthesis frame, thereby enhancing the quality of combination while being robust against errors. A process of optimizing a synthesis weight may be performed during an encoding process. This is further described with reference to FIGS. 8 and 9.

FIG. 7 is a diagram for describing an operation, performed by an image processing device, of generating a synthesis frame, according to an embodiment of the present disclosure.

In descriptions of FIG. 7, the image processing device may be a decoder. In FIG. 7, for convenience of explanation, only one scale of multi-scale pixel synthesis is shown and described.

The image processing device may obtain encoded data from a transmission system (for example, an encoder). For example, the image processing device may obtain a reference frame 0, a reference frame N, disparity vectors and synthesis weights including pixel movement information from 0 to N, and disparity vectors and synthesis weights including pixel movement information from N to 0.

In an embodiment, the image processing device may generate a warped image based on a reference frame and a disparity vector. The warped image may also be referred to as a predicted image.

For example, a warped image 0, which is an image at an n^{th} view predicted from the reference frame 0, may be generated. The warped image 0 may be obtained by shifting pixels of the reference frame to correspond to n (o<n<N), based on the disparity vector including pixel movement information from 0 to N. In the same way, a warped image N, which is an image at the nth view predicted from the reference frame N, may be generated based on the reference frame N and the disparity vector including pixel movement information from N to 0.

In an embodiment, the image processing device may generate a weight map. The weight map may include at least one of synthesis weight and confidence weight. The weight map may be the same scale as the warped image. For example, when weighted combination is performed on the warped image 0 and the warped image N so that an intermediate image is generated, a weight map 0 710 may be applied to the warped image 0, and a weighted map N 720 may be applied to a warped image N.

Because the synthesis weight is described above in descriptions of FIGS. 5 and 6, redundant descriptions are omitted for convenience of explanation, and only an occlusion map and a confidence weight are described below. The confidence weight is generated based on the occlusion map and may refer to a weight indicating that pixels used in the synthesis may be trusted so as to handle occlusion regions where no pixel information is present.

The image processing device may obtain the occlusion map. The occlusion map may be aligned with the reference frame. For example, occlusion map information 712 aligned with the reference frame 0 and occlusion map information 722 aligned with the reference frame N may be obtained. The occlusion map information 712 aligned with the reference frame 0 may include information about an occlusion region when the view is shifted from 0 to N, and the occlusion map information 722 aligned with the reference frame N may include information about an occlusion region when the view is shifted from N to 0.

The confidence weight included in the weight map 0 710 may ensure that only reliable pixels are used when shifting the reference frame 0 to the n^{th} view by using the disparity vector including pixel movement information from 0 to N. For example, when the confidence weight is greater than or equal to a preset value, the pixel is a trusted pixel, and thus the pixel may be processed as a valid pixel when generating a warped image. Alternatively, when the confidence weight is less than the preset value, the pixel is not a trusted pixel, and thus, when generating a warped image, the pixel may be processed as a pixel which is not used or to which a relatively low weight is applied.

Similarly, the confidence weight included in the weighted map N 720 may ensure that only reliable pixels are used, or pixels with relatively low confidence is given a relatively low weight, when shifting the reference frame N to the n^{th} view by using the disparity vector including pixel movement information from N to 0.

In other words, the image processing device may generate a synthesis frame based on reference frames, disparity vectors, synthesis weights, and occlusion maps.

More specific examples of operations performed when generating a synthesis frame at the nth view between 0 to N are described as follows.

### - First example

1) A warped image 0 is generated based on a reference frame 0, a disparity vector including pixel movement information from 0 to N, and a confidence weight included in the weight map 0 710.
2) A warped image N is generated based on a reference frame N, a disparity vector including pixel movement information from N to 0, and a confidence weight included in the weighted map N 720.
3) An intermediate image is generated based on the warped image 0, a synthesis weight included in the weight map 0 710, and a synthesis weight included in the weight map N 710.
4) A synthesis frame is generated by performing weight combination on a plurality of intermediate images generated by performing the 1) to 3) above in an independent multi-scale flow, by using a synthesis weight.

### - Second example

1) A warped image 0 is generated based on a reference frame 0 and a disparity vector including pixel movement information from 0 to N.
2) A warped image N is generated based on a reference N and a disparity vector including pixel movement information from N to 0.
3) An intermediate image is generated based on the warped image 0, a synthesis weight and confidence weight included in the weight map 0 710, the warped image N, and a synthesis weight and confidence weight included in the weight map N 710.
4) A synthesis frame is generated by performing weight combination on a plurality of intermediate images generated by performing the 1) to 3) above in an independent multi-scale flow, by using the synthesis weight.

The operations in the first example or the second example are described as an example of generating a synthesis frame at the nth view, and the image processing device may generate synthesis frames corresponding to a plurality of views within reference frames. For example, synthesis frames respectively corresponding to views between 0 to N, that is, 1, 2, ..., n, ..., N-1, may be generated through pixel-based multi-scale synthesis in the same way.

FIG. 8 is a diagram for describing an operation, performed by an image processing device, of optimizing a view stride of a synthesis weight and a reference frame.

Optimization operations described below may be performed by an encoder. In FIG. 8, when describing the optimization operations of the present disclosure, an encoder that performs the optimization operations is referred to as an "image processing device".

In an embodiment, the image processing device may obtain original light field images (or, videos). The original light field images may be images corresponding to N views.

In operation S810, the image processing device may select reference frames from among the original light field images.

The image processing device may select the reference frames based on a preset view stride V. For example, from among the original light field images corresponding to the N views, M frames (M<N) may be selected as reference frames.

In operation S820, the image processing device may predict warped images.

The image processing device may predict warped images corresponding to views between the reference frames. The image processing device may predict disparity vectors for generating the warped images.

In operation S830, the image processing device may generate synthesis frames through pixel-based multi-scale synthesis.

The image processing device may generate an intermediate image by combining the warped images. In addition, the intermediate images may be combined to generate a synthesis frame. The image processing device may apply a scale weight indicating a scale magnitude, when generating multi-scale warped images. The image processing device may apply a synthesis weight when generating an intermediate image and generating a synthesis frame.

In operation S840, the image processing device may measure a loss between original and synthesis frames and perform optimization.

The image processing device may obtain an original frame corresponding to a synthesis frame, and measure the loss by comparing the synthesis frame with the original frame. For example, when the synthesis frame is a frame corresponding to the n^{th} view, the image processing device may obtain an original frame corresponding to the n^{th} view from among the original light field images.

The image processing device may optimize parameters used for synthesis, based on the loss between the original frame and the synthesis frame. The image processing device may update at least one of a predicted disparity vector, a scale weight indicating a multi-scale scale magnitude, a synthesis weight used when synthesizing an intermediate image based on warped images, or a synthesis weight used when synthesizing synthesis frames based on the intermediate images.

The image processing device may repeatedly perform operations S830 to S840 until the loss value is minimized. The image processing device may generate multi-scale warped images based on the updated disparity vector and scale weights.

The image processing device may generate multi-scale intermediate images based on the multi-scale warped images and the synthesis weight. The image processing device may generate a synthesis frame based on the multi-scale intermediate images and the synthesis weight. In this case, the synthesis weight (first synthesis weight) for generating the plurality of intermediate images and the synthesis weight (second synthesis weight) for generating the synthesis frame may be different from each other.

The image processing device may compare the generated synthesis frame with the original frame, remeasure the loss, and update the weights, thereby improving the quality of the synthesis frame.

In an embodiment, the image processing device may evaluate the synthesis quality of the synthesis frame. The image processing device may adjust the preset view stride V for selecting reference frames, based on the synthesis quality.

For example, when the quality of the synthesis frame is less than a target value even after the optimization process is performed, it may be because a view stride between the reference frames is too large, making it difficult to estimate disparity and thus reducing the quality of the warped image. The image processing device may reduce the preset view stride V and repeat operations S810 to S840. When the quality of the synthesis frame is greater than or equal to the target value after the optimization process is performed, the image processing device may encode the reference frames and encode information (for example, disparity vector, scale weight, synthesis weight, etc.) about the optimized warped images.

In operation S850, a pixel-based multi-scale synthesis operation may be performed. Operation S850 may be performed by a decoder. The decoder may be the same device as the image processing device that performed operations S810 to S840, or it may be a different device. For example, operation S850 may be performed in the image processing device that performs operations S810 to S840 described above, or operations S810 to S840 may be performed by the first image processing device and operation S850 may be performed by the second image processing device. As a result of performing operation S850, light field images having N views may be reconstructed. The reconstructed light field images may include reconstructed reference frames and synthesis frames.

FIG. 9 is a diagram for describing an operation, performed by an image processing device, of optimizing a view stride of a synthesis weight and a reference frame.

FIG. 9 is intended to further describe the optimization operation in FIG. 8. Optimization operations may be performed by an encoder. In descriptions of FIG. 9, an encoder that performs the optimization operations is referred to as an "image processing device".

In an embodiment, the disparity vector, weights, and view strides of the reference frame may be optimized on a scene-by-scene basis. That is, in the present disclosure, instead of using trained or predetermined values, values optimized for each input data are used.

For example, the image processing device may optimize parameters for reconstructing first light field images. The image processing device may select reference images for the first light field images and predict disparity vectors. The image processing device may generate synthesis frames through pixel-based multi-scale synthesis using a reference frame, a disparity vector, and initial weights (scale weight and synthesis weight), thereby reconstructing the first light field images. The image processing device may measure the loss by comparing the reconstructed first light field images with the original first light field images, and update at least one of the predicted disparity vector, a scale weight indicating a multi-scale scale magnitude, a synthesis weight used when synthesizing intermediate images based on the warped images, or a synthesis weight used when synthesizing a synthesis frame based on the intermediate images. This is described with reference to FIG. 8, and thus redundant descriptions thereof are omitted.

In an embodiment, the optimization of the image processing device is scene-by-scene optimization. Accordingly, optimized parameters may be determined for each of light field image of different scenes. In the example described above, the optimized parameters are parameters optimized for the first light field images. Accordingly, the encoder may encode optimized parameters and reference frames for the first light field images, and the decoder may decode the same and reconstruct the first light field images. In addition, when the image processing device encodes second light field images, which are light field images of another scene, the image processing device may perform operations optimized for second light field images and determine optimized parameters.

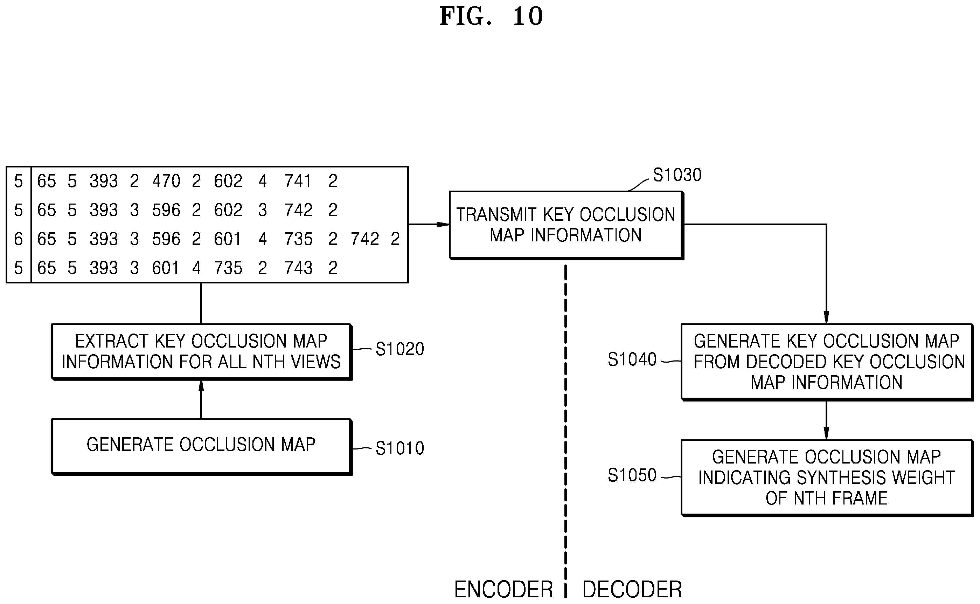

FIG. 10 is a diagram for describing an encoding and decoding operation for an occlusion map, used in an encoding and decoding method of the present disclosure.

In operation S1010, the encoder may generate an occlusion map. The encoder may shift pixels by a preset view stride based on reference frames, and generate an occlusion map indicating occlusion regions at views between the reference frames. For example, occlusion maps for all n^{th} views between the reference frame 0 and the reference frame N may be generated. The occlusion maps may include confidence weight information.

In operation S1020, the encoder may extract key occlusion map information for all n^{th} views.

In an embodiment, the occlusion region may gradually increase or decrease depending on the view distance. Accordingly, occlusion regions corresponding to a plurality of views may be processed by using a single piece of information. The key occlusion map may indicate a single map formed by combining occlusion maps corresponding to respective views. In other words, the key occlusion map is generated based on the occlusion maps corresponding to the respective views, and thus the key occlusion map information may be information available for all n^{th} views between the views of the reference frames.

The key occlusion map information may include information related to available confidence weights for all intermediate views N between the reference frames. Specifically, the key occlusion map information may include information indicating whether a pixel of a warped image at an intermediate view n is an available pixel. For example, the key occlusion map information may include the number of occlusion regions and a maximum length of the occlusion regions.

In operation S1030, the encoder may transmit the key occlusion map information to the decoder. The encoder may encode the key occlusion map and transmit the same to the decoder. Because the occlusion map and the key occlusion map are mutually convertible, the encoded key occlusion map may also be referred to as an encoded occlusion map.

In operation S1040, the decoder may generate a key occlusion map from decoded key occlusion map information. The decoder may obtain the key occlusion map by decoding the encoded key occlusion map information. The key occlusion map may be data available for all n^{th} views between views of the reference frames.

In operation S1050, the decoder may generate an occlusion map indicating confidence weights used for synthesizing n frames. Because the key occlusion map is data available for all n^{th} views between the views of the reference frames, the decoder may generate, by using the key occlusion map, occlusion maps indicating confidence weights corresponding to intermediate views n between the reference frames.

For example, when views of the reference frame 0 and the reference frame N are 0 and N, respectively, and an intermediate view is n, the decoder may generate occlusion maps corresponding to warped images having intermediate views between 0 and N based on the reference frame 0. Specifically, the decoder may generate occlusion maps indicating confidence weights used for synthesizing respective synthesis frames of 1, ..., N-1.

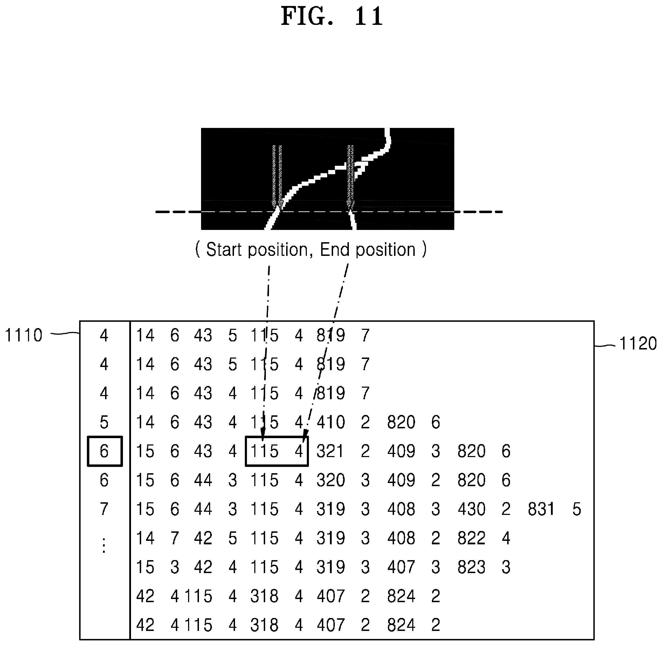

FIG. 11 is a diagram for describing a key occlusion map according to an embodiment of the present disclosure.

The key occlusion map may indicate a single map formed by combining occlusion maps corresponding to respective views. In other words, the key occlusion map is generated based on the occlusion maps corresponding to the respective views, and thus the key occlusion map information may be information available for all n^{th} views between the views of the reference frames.

The key occlusion map may include information related to available confidence weights for all intermediate views N between the reference frames. Specifically, information about the key occlusion map may include information related to occlusion regions, indicating whether a pixel of a warped image is a pixel that may be used at an intermediate view n. For example, the information about the key occlusion map may include information 1110 about the number of occlusion regions and information 1120 about the maximum length of the occlusion region.

The information 1110 about the number of occlusion regions may indicate the number of occlusion regions present along a horizontal axis of an image. For example, when the number of information 1110 about the number of occlusion regions is 6, it may indicate that there are six occlusion regions in the corresponding row of the image.

The information 1120 about the maximum length of the occlusion regions may indicate the maximum length of the occlusion region present along the horizontal axis of the image. The information 1120 about the maximum length of the occlusion region may include information indicating a starting point and maximum length of the occlusion region.

The occlusion map may be aligned with the first reference frame and the second reference frame. For example, occlusion maps corresponding to views between the first reference frame and the second reference frame may be generated based on the first reference frame or the second reference frame. Here, the maximum length may indicate a length of the occlusion region in an occlusion map corresponding to the farthest view based on the first reference frame (in the case of an occlusion map aligned with the first reference frame). Alternatively, it may indicate the length of the occlusion region in an occlusion map corresponding to the farthest view based on the second reference frame (in the case of an occlusion map aligned with the second reference frame). Because that the occlusion map is aligned based on a reference frame is described in the description of FIG. 7, repeated descriptions thereof are omitted.

In an embodiment, the length of the occlusion region may increase linearly. For example, when a value of the information 1120 about the maximum length of the occlusion region is (115, 4), an x value of a starting coordinate of the occlusion region may be 115 and the maximum length may be 4. In this case, the length of the occlusion region of the occlusion map at a distance of the farthest view from the reference frame may be the maximum length of 4, and the length of the occlusion region of the occlusion map corresponding to intermediate views may increase linearly until it reaches 4.

In an embodiment, the length of the occlusion region may increase non-linearly. For example, the length of the occlusion region may be changed according to a quadratic function. In this case, length information included in the information 1120 about the maximum length of the occlusion region may include information for interpreting the length information. For example, the information for interpreting the length information may include second-order coefficients used for non-linear increase/decrease calculations. In the same way, the length information included in the information 1120 about the maximum length of the occlusion region may include one or more coefficients included in an n^{th} degree function for interpreting the length information.

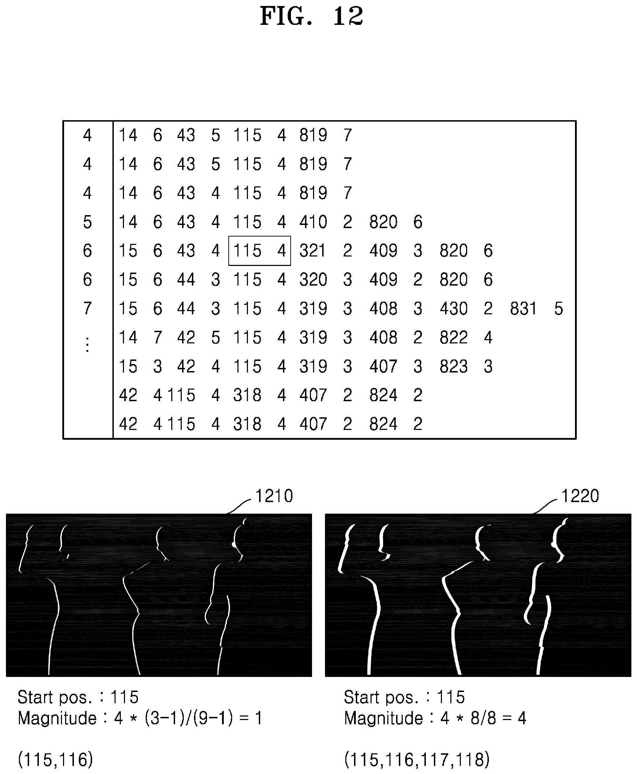

FIG. 12 is a diagram for describing an operation of generating occlusion maps based on a key occlusion map, according to an embodiment of the present disclosure.

In descriptions of FIG. 12, an example is described in which light field images include frame 1 to frame 9, reference frames are frame number 1 to frame number 9, and occlusion maps aligned with reference frame 1 are generated. However, the disclosure is not limited thereto, and occlusion maps aligned with reference frame 9 may be generated in the same or similar way as described below.

In an embodiment, the decoder may decode an encoded occlusion map (or, encoded key occlusion map). The decoder may generate an occlusion map based on a key occlusion map.

For example, the decoder may generate an occlusion map 1210 corresponding to frame 3 based on the key occlusion map. Specifically, when a value of the maximum length of an occlusion region of the key occlusion map is (115, 4), it indicates that an x value of starting coordinates of the occlusion region is 115 and the maximum length of the occlusion region is 4. In this case, because frame 3 is not a farthest frame from frame 1, the length of the occlusion region is not determined as the maximum length of 4, but may be recalculated to a value indicating the occlusion region at an intermediate view. For example, as shown in FIG. 12, the length of the occlusion region corresponding to frame 3 may be calculated to 1. In this case, the x coordinates of pixels corresponding to the occlusion region in the corresponding row of the image are 115 and 116. Because the occlusion map indicates a confidence weight representing a degree of reliability of a pixel, the pixels at the x coordinates of 115 and 116 corresponding to the occlusion region may be considered unreliable pixels. In other words, the decoder generates a synthesis frame corresponding to frame 3, and a warped image and an intermediate image are generated in a process of generating the synthesis frame. Here, the decoder generates a warped image, which is intermediate data obtained in the process of generating the synthesis frame corresponding to frame 3, or when generating the intermediate image, according to a confidence weight of the occlusion map 1210 corresponding to frame 3, pixels corresponding to the occlusion map 1210 may not be used or may be used after a relatively low weight is applied.

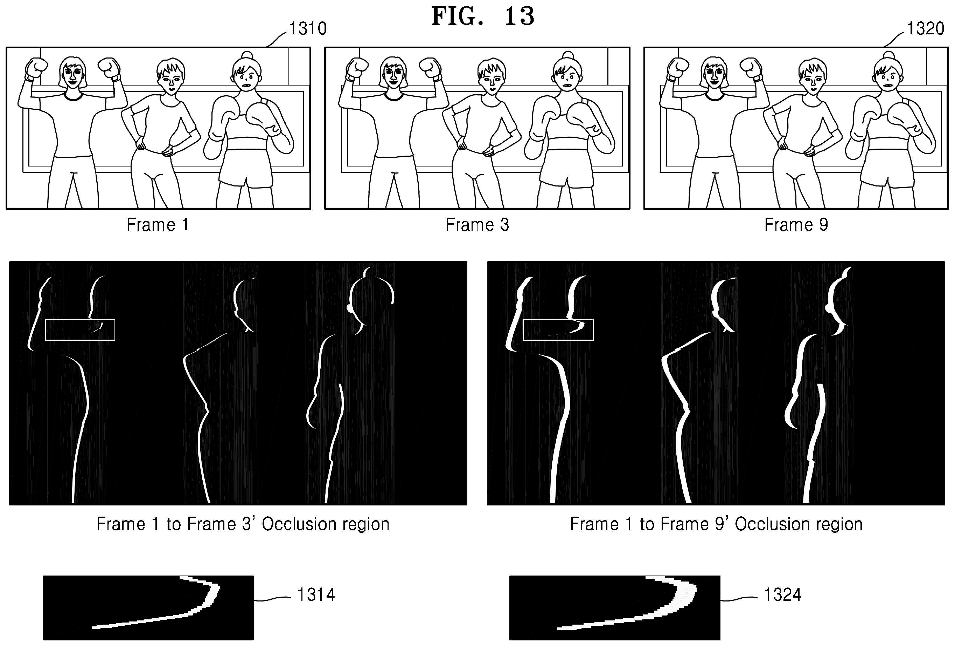

In addition, for example, the decoder may generate an occlusion map 1220 corresponding to frame 9 based on the key occlusion map. Specifically, when a value of the maximum length of an occlusion region of the key occlusion map is (115, 4), it indicates that an x value of starting coordinates of the occlusion region is 115 and the maximum length thereof is 4. In this case, because frame 9 is the farthest frame from frame 1, the length of the occlusion region may be determined to be the maximum length of 4. When the decoder generates a synthesis frame corresponding to frame 9, by referring to the occlusion map 1220 corresponding to frame 9, pixels corresponding to the occlusion map 1220 may not be used or may be used after a relatively low weight is applied. A result of generating the occlusion map is further described with reference to FIG. 13.

FIG. 13 is a diagram for describing an occlusion map according to an embodiment of the present disclosure.

In descriptions of FIG. 13, an example is described in which light field images include frame 1 1310 to frame 9 1320. In addition, an example is described in which the frame 1 1310 and the frame 9 1320 are selected as reference frames.

In an embodiment, occlusion maps aligned with frame 1 1310 based on frame 1 1310 may be obtained by the decoder. For example, as shown in FIG. 13, an occlusion map 1312 corresponding to frame 3 and an occlusion map 1322 corresponding to frame 9 may be generated.

The decoder may generate synthesis frame 3 corresponding to frame 3. The decoder may generate multi-scale intermediate images based on multi-scale disparity vectors, when generating a synthesis frame, and may generate a synthesis frame based on the multi-scale intermediate images.

When generating synthesis frame 3, the decoder may combine, at different scales, warped images generated based on frame 1 1310, which is a reference frame, with warped images generated based on frame 9 1320, which is a reference frame, thereby generating a multi-scale image. The occlusion map 1312 corresponding to frame 3, shown in FIG. 13, indicates a confidence weight at an intermediate view 3 when a view is shifted to frame 9 based on frame 1 1310. Similarly, the occlusion map 1322 corresponding to frame 9 indicates a confidence weight at a last view, view 9, when the view is shifted to frame 9 1320 based on frame 1 1310.

Referring to FIG. 13, it can be seen that as a view moves from frame 1 1310 to frame 9 1320 and a view distance increases, the length of the occlusion region increases. For example, an occlusion region 1314 of the occlusion map 1312 corresponding to frame 3 has a relatively shorter length of occlusion region than an occlusion region 1324 of the occlusion map 1322 corresponding to frame 9.

That is, when the view distance from the reference frame increases, a size of an area lacking pixel information due to an occlusion region increases, and thus, when the view distance increases, the number of unusable pixels increases. The decoder uses a confidence weight of an occlusion map when generating a synthesis frame, so that pixels with low confidence are not used or low weights are applied.

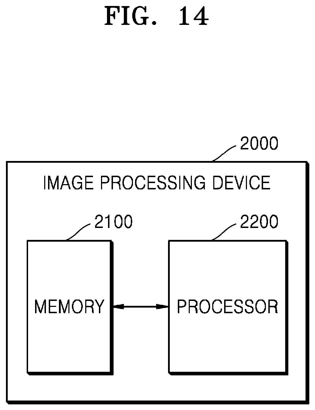

FIG. 14 is a block diagram illustrating a configuration of an image processing device according to an embodiment of the present disclosure.

In an embodiment, an image processing device 2000 may correspond to the encoder and/or decoder of the present disclosure. The image processing device 2000 may perform an encoding operation or decoding operation of the present disclosure. For example, the image processing device 2000 is an encoder and may perform encoding operations of the present disclosure. Alternatively, the image processing device 2000 is a decoder and may perform decoding operations of the present disclosure. The encoder and the decoder may be implemented as the same device or different devices. For example, the image processing device 2000 is an encoder/decoder and may perform encoding/decoding operations. Alternatively, a first image processing device may be an encoding device and may perform encoding operations, and a second image processing device is a decoding device and may perform decoding operations.

In an embodiment, the image processing device 2000 may include memory 2100 and a processor 2200.

The memory 2100 may store instructions, data structures, and program code that may be read by the processor 2200. Operations performed by the processor 2200 may be implemented by executing the instructions or code of a program stored in the memory 2100.

The memory 2200 may include memory of a flash memory type, hard disk type, multimedia card micro type, and card-type (for example, Secure Digital (SD) or eXtreme Digital (XD) memory), and may include non-volatile memory including at least one of Read-Only Memory (rom), Electrically Erasable Programmable Read-Only Memory (EEPROM), Programmable Read-Only Memory (prom), magnetic memory, a magnetic disk, or an optical disk, and non-volatile memory such as Random Access Memory (RAM) or Static Random Access Memory (SRAM).

The memory 2100 may store one or more instructions and/or programs that cause the image processing device 2000 to operate to process an image. For example, the memory 2100 may store instructions and/or programs for implementing functions of an encoder, such as reference view selection, encoding, disparity estimation, or occlusion map encoding. In addition, for example, the memory 2100 may store instructions and/or programs for implementing functions of a decoder, such as decoding, occlusion map decoding, or adaptive view synthesis.

The processor 2200 is circuitry that enables overall operations of the image processing device 2000. For example, the processor 2200 executes one or more instructions of a program stored in the memory 2100 to control overall operations for the image processing device 2000 to perform encoding, decoding, and image synthesis. There may be one or more processors 2200.

The processor 2200 may include, for example, at least one of a Central Processing Unit, a Microprocessor, a Graphic Processing Unit, Application Specific Integrated Circuits (ASICs), Digital Signal Processors (DSPs), Digital Signal Processing Devices (DSPDs), Programmable Logic Devices (PLDs), Field Programmable Gate Arrays (FPGAs), an Application Processor, a Neural Processing Unit, or an artificial intelligence-specific processor designed with a hardware structure specialized for processing artificial intelligence models. However, the disclosure is not limited thereto.

The processor 2200 may write data to the memory 2100 or read data stored in the memory 2100. For example, the processor 2200 may load, into volatile memory, one or more instructions and/or programs stored in non-volatile memory, and process data and program code. The operations of the processor 2200, such as reference view selection, encoding, disparity estimation, and occlusion map encoding, and the operations of the decoder, such as decoding, occlusion map decoding, and adaptive view synthesis, executed by the processor 2200 are described above with reference to the previous drawings, and thus repeated descriptions thereof are omitted.

A method according to an embodiment of the present disclosure includes a plurality of operations, the plurality of operations may be performed by a single processor or by a plurality of processors. For example, when a first operation, a second operation, and a third operation are performed by the method according to an embodiment, the first operation, the second operation, and the third operation may all be performed by a first processor, or the first operation and the second operation may be performed by the first processor (for example, a general-purpose processor) and the third operation may be performed by a second processor (for example, an artificial intelligence-specific processor). Here, the artificial intelligence-specific processor, which is an example of the second processor, may perform operations for training/inference of an artificial intelligence model. However, an embodiment of the present disclosure is not limited thereto.

One or more processor according to the present disclosure may be implemented as a single-core processor or as a multi-core processor.

When the method according to an embodiment of the present disclosure includes a plurality of operations, the plurality of operations may be performed by a single core, or by a plurality of cores included in one or more processors.

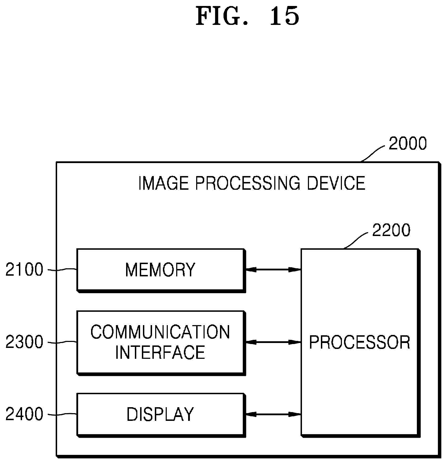

FIG. 15 is a block diagram illustrating a configuration of an image processing device according to an embodiment of the present disclosure.

In an embodiment, the image processing device 2000 may include the memory 2100, the processor 2200, a communication interface 2300, and a display. The memory 2100 and the processor 2200 in FIG. 15 may correspond to the memory 2100 and the processor 2200 in FIG. 14, respectively. Accordingly, for brevity, repeated descriptions are omitted.

The communication interface 2300 may perform data communication with other electronic devices under the control by the processor 2200. For example, when the image processing device 2000 operates as an encoder, the image processing device 2000 may transmit encoded data to the decoder. Alternatively, when the image processing device 2000 operates as a decoder, the image processing device 2000 may receive encoded data from the encoder.

The communication interface 2300 may include, for example, a communication circuit capable of performing data communication between the image device 2000 and other electronic devices by using at least one of data communication schemes, including Wired LAN, Wireless LAN, Wi-Fi, Bluetooth, ZigBee, Wi-Fi Direct (WFD), infrared Data Association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliances (WiGig), and RF communication.

A display 2400 may output an image signal to a screen of the image processing device 2000 under the control by the processor 2200. For example, the display 2400 may output original light field images to the screen. For example, the display 2400 may output reconstructed light field images, including synthesis frames, to the screen.

The present disclosure relates to a method of efficiently compressing, transmitting, and reconstructing large-capacity light field images. The technical objective of the present disclosure are not limited to those mentioned above, and other technical objectives not mentioned will be clearly understood by those skilled in the art from the description in the present specification.

According to an aspect of the present disclosure, a method of decoding and outputting light field images may be provided.

The method may include obtaining an encoded first frame and an encoded second frame, indicating reference frames captured from different views, and an encoded synthesis parameter and an encoded occlusion map for generating a synthesis frame.

The method may include decoding the encoded first frame, the encoded second frame, the encoded synthesis parameter, and the encoded occlusion map to reconstruct a first frame, a second frame, a disparity vector, a synthesis weight, and an occlusion map.

The method may include generating a synthesis frame based on the first frame, the second frame, the disparity vector, the synthesis weight, and the occlusion map.

The method may include outputting light field images including the first frame, the second frame, and the synthesis frame.

The encoded synthesis parameter may include pixel movement information and synthesis weight information.

The encoded occlusion map may indicate an occlusion region by an object, occurring between a first view corresponding to the first frame and a second view corresponding to the second frame, and may include confidence weight information for processing the occlusion region and information related to the occlusion region.

The decoding may include reconstructing multi-scale disparity vectors and multi-scale synthesis weights based on a plurality of encoded synthesis parameters.

The generating the synthesis frame may include generating a plurality of multi-scale intermediate images based on the multi-scale disparity vectors.

The generating of the synthesis frame may include generating the synthesis frame by combining the plurality of intermediate images.

The generating of the plurality of intermediate images may include generating a first intermediate image by applying a first synthesis weight to the first frame and a first disparity vector corresponding to the first frame, and the second frame and a second disparity vector corresponding to the second frame.

The generating of the synthesis frame may include generating the synthesis frame by applying a second synthesis weight to the first intermediate image and a second intermediate image.

The generating of the synthesis frame may be generating a plurality of synthesis frames corresponding to a plurality of views between a first view corresponding to the first frame and a second view corresponding to the second frame.

According to an aspect of the present disclosure, an image processing device may be provided. The image processing device may include a memory storing one or more instructions, and one or more processors configured to execute the one or more instructions stored in the memory.

The one or more processors may execute the one or more instructions to obtain an encoded first frame and an encoded second frame, indicating reference frames captured from different views, and an encoded synthesis parameter and an encoded occlusion map for generating a synthesis frame.

The one or more processors may execute the one or more instructions to decode the encoded first frame, the encoded second frame, the encoded synthesis parameter, and the encoded occlusion map to reconstruct a first frame, a second frame, a disparity vector, a synthesis weight, and an occlusion map.

The one or more processors may execute the one or more instructions to generate a synthesis frame based on the first frame, the second frame, the disparity vector, the synthesis weight, and the occlusion map.

The one or more processors may execute the one or more instructions to output light field images including the first frame, the second frame, and the synthesis frame.

The encoded synthesis parameter may include pixel movement information and synthesis weight information.

The encoded occlusion map may indicate an occlusion region by an object, occurring between a first view corresponding to the first frame and a second view corresponding to the second frame, and may include confidence weight information for processing the occlusion region and information related to the occlusion region.

The one or more processors may execute the one or more instructions to reconstruct multi-scale disparity vectors and multi-scale synthesis weights based on a plurality of encoded synthesis parameters.

The one or more processors may execute the one or more instructions to generate a plurality of multi-scale intermediate images based on the multi-scale disparity vectors.

The one or more processors may execute the one or more instructions to generate the synthesis frame by combining the plurality of intermediate images.

The one or more processor may execute the one or more instructions to generate a first intermediate image by applying a first synthesis weight to the first frame and a first disparity vector corresponding to the first frame, and the second frame and a second disparity vector corresponding to the second frame.

The one or more processors may execute the one or more instructions to generate the synthesis frame by applying a second synthesis weight to the first intermediate image and a second intermediate image.

The one or more processors may execute the one or more instructions to generate a plurality of synthesis frames corresponding to a plurality of views between a first view corresponding to the first frame and a second view corresponding to the second frame.

According to an aspect of the present disclosure, a method of encoding light field images may be provided.

The method may include selecting reference frames including a first frame and a second frame from among original light field images including a plurality of views.

The method may include generating a disparity vector, a synthesis weight, and an occlusion map for inferring frames between the first frame and the second frame.

The method may include encoding the first frame, the second frame, the disparity vector, the synthesis weight, and the occlusion map.

The selecting of the reference frames may include selecting a plurality of reference frames including the first frame and the second frame based on a preset view stride.

The method may include generating a synthesis frame based on the first frame, the second frame, the disparity vector, the synthesis weight, and the occlusion map.

The method may include comparing the synthesis frame with an original frame and measuring a difference.

The method may include updating the synthesis weight based on the difference.

The generating of the synthesis frame may include generating multi-scale warped images based on the first frame, the second frame, and the disparity vectors.

The generating the synthesis frame may include generating a plurality of multi-scale intermediate images based on the multi-scale warped images.

The generating of the synthesis frame may include generating the synthesis frame by combining the plurality of intermediate images.

The synthesis weight may include a first synthesis weight for generating the plurality of intermediate images and a second synthesis weight for generating the synthesis frame.

The updating of the synthesis weight may include updating at least one of the first synthesis weight and the second synthesis weight.

The method may include evaluating synthesis quality of the synthesis frame.

The method may include adjusting, based on the synthesis quality, the preset view stride for selecting the reference frames.

Meanwhile, embodiments of the present disclosure may be implemented in the form of a recording medium including computer-executable instructions, such as a program module executed by a computer. Computer-readable media may be any available medium accessible by a computer, and includes both volatile and non-volatile media, and both removable and non-removable media. In addition, computer-readable media may include computer storage media and communication media. Computer storage media include all volatile and non-volatile, removable and non-removable media implemented by any method or technique for storing information such as computer-readable instructions, data structures, program modules, or other data. Communication data may typically include computer-readable instructions, data structures, or other data of modulated data signals, such as program modules.

In addition, computer-readable storage media may be provided in the form of non-transitory storage media. Here, the term 'non-transitory storage medium' simply means a tangible device that does not include a signal (for example, electromagnetic waves), and the term does not distinguish between cases where data is stored semi-permanently and cases where it is stored temporarily. For example, the 'non-transitory storage media' may include a buffer where data is temporarily stored.

According to an embodiment, a method according to various embodiments disclosed in the present document may be included and provided in a computer program product. The computer program product may be traded between sellers and buyers as commodities. The computer program product may be distributed in the form of a machine-readable storage medium (e.g., compact disc read only memory (CD-ROM)), or may be distributed (downloaded or uploaded) online through an application store or directly between two user devices (e.g., smartphones). In the case of online distribution, at least a portion of a computer program product (e.g., a downloadable app) may be at least temporarily stored or temporarily generated on a device-readable storage medium, such as memory of a manufacturer's server, an application store's server, or a relay server.

The above description of the present disclosure is for illustrative purposes only, and those skilled in the art to which the present disclosure belongs would understand that other specific forms may be easily modified without changing the technical concept or essential features of the present disclosure. Therefore, the embodiments described above should be understood as examples in all respects and not limiting. For example, each component described as a single unit may be implemented in a distributed manner, and components described as distributed may also be implemented in a combined form.

The scope of the present disclosure is defined by the claims set forth below rather than by the detailed description above, and all modifications or variations derived from the meaning and scope of the claims and equivalent concepts thereof should be interpreted as being included within the scope of the present disclosure.

## Claims

1. A method of decoding and outputting light field images, the method comprising:
obtaining an encoded first frame and an encoded second frame, indicating reference frames captured from different views, and an encoded synthesis parameter and an encoded occlusion map for generating a synthesis frame;
decoding the encoded first frame, the encoded second frame, the encoded synthesis parameter, and the encoded occlusion map to reconstruct a first frame, a second frame, a disparity vector, a synthesis weight, and an occlusion map;
generating a synthesis frame based on the first frame, the second frame, the disparity vector, the synthesis weight, and the occlusion map; and
outputting light field images including the first frame, the second frame, and the synthesis frame.

2. The method of claim 1, wherein the encoded synthesis parameter include pixel movement information and synthesis weight information.

3. The method of claim 2, wherein the encoded occlusion map indicates an occlusion region by an object, occurring between a first view corresponding to the first frame and a second view corresponding to the second frame, and includes confidence weight information for processing the occlusion region and information related to the occlusion region.

4. The method of claim 1, wherein the decoding comprises reconstructing multi-scale disparity vectors and multi-scale synthesis weights based on a plurality of encoded synthesis parameters.

5. The method of claim 4, wherein the generating of the synthesis frame comprises:
generating a plurality of multi-scale intermediate images based on the multi-scale disparity vectors; and
generating the synthesis frame by combining the plurality of intermediate images.

6. The method of claim 5, wherein the generating of the plurality of
intermediate images comprises generating a first intermediate image by applying a first synthesis weight to the first frame and a first disparity vector corresponding to the first frame, and to the second frame and a second disparity vector corresponding to the second frame, and
the generating of the synthesis frame comprises generating the synthesis frame by applying a second synthesis weight to the first intermediate image and a second intermediate image.

7. The method of claim 1, wherein the generating of the synthesis frame comprises generating a plurality of synthesis frames corresponding to a plurality of views between a first view corresponding to the first frame and a second view corresponding to the second frame.

8. An image processing device comprising:
memory storing one or more instructions; and
one or more processors configured to execute the one or more instructions stored in the memory,
wherein the one or more processors execute the one or more instructions to:
obtain an encoded first frame and an encoded second frame, indicating reference frames captured from different views, and an encoded synthesis parameter and an encoded occlusion map for generating a synthesis frame;
decode the encoded first frame, the encoded second frame, the encoded synthesis parameter, and the encoded occlusion map to reconstruct a first frame, a second frame, a disparity vector, a synthesis weight, and an occlusion map;
generate a synthesis frame based on the first frame, the second frame, the disparity vector, the synthesis weight, and the occlusion map; and
output light field images including the first frame, the second frame, and the synthesis frame.

9. The image processing device of claim 8, wherein the encoded synthesis parameter includes pixel movement information and synthesis weight information.

10. The image processing device of claim 9, wherein the encoded occlusion map indicates an occlusion region by an object, occurring between a first view corresponding to the first frame and a second view corresponding to the second frame, and includes confidence weight information for processing the occlusion region and information related to the occlusion region.

11. The image processing device of claim 8, wherein the one or more processors execute the one or more instructions to reconstruct multi-scale disparity vectors and multi-scale synthesis weights based on a plurality of encoded synthesis parameters.

12. The image processing device of claim 11, wherein the one or more processors execute the one or more instructions to:
generate a plurality of multi-scale intermediate images based on the multi-scale disparity vectors; and
generate the synthesis frame by combining the plurality of intermediate images.

13. The image processing device of claim 12, wherein the one or more processors execute the one or more instructions to:
generate a first intermediate image by applying a first synthesis weight to the first frame and a first disparity vector corresponding to the first frame, and to the second frame and a second disparity vector corresponding to the second frame; and
generate the synthesis frame by applying a second synthesis weight to the first intermediate image and a second intermediate image.

14. The image processing device of claim 11, wherein the one or more processors execute the one or more instructions to generate a plurality of synthesis frames corresponding to a plurality of views between a first view corresponding to the first frame and a second view corresponding to the second frame.

15. A method of encoding light field images, the method comprising:
selecting reference frames including a first frame and a second frame from among original light field images including a plurality of views;
generating a disparity vector, a synthesis weight, and an occlusion map for inferring frames between the first frame and the second frame; and
encoding the first frame, the second frame, the disparity vector, the synthesis weight, and the occlusion map.
